Europäisches Patentamt

(19) European Patent Office

Office européen des brevets

(11) Numéro de publication : **0 338 896 B1**

(12) **FASCICULE DE BREVET EUROPEEN**

(45) Date de publication du fascicule du brevet :
19.06.91 Bulletin 91/25

(51) Int. Cl.⁵ : **C02F 1/48, C02F 1/46**

(21) Numéro de dépôt : **89401021.4**

(22) Date de dépôt : **13.04.89**

(54) **Procédé et dispositif de traitement de l'eau du réseau de distribution par impulsions électriques à durée modulée.**

(30) Priorité : **15.04.88 FR 8805004**

(43) Date de publication de la demande :
**25.10.89 Bulletin 89/43**

(45) Mention de la délivrance du brevet :
**19.06.91 Bulletin 91/25**

(84) Etats contractants désignés :
**AT BE CH DE ES FR GB GR IT LI LU NL SE**

(56) Documents cités :
**EP-A- 0 060 193**
**AU-A- 497 936**
**BE-A- 344 382**
**BE-A- 406 956**
**CH-A- 201 014**
**CH-A- 319 956**
**DE-B- 1 963 391**
**DE-C- 629 479**
**FR-A- 1 310 277**
**FR-A- 2 471 953**
**GB-A- 601 579**

(73) Titulaire : **Freyne, Claude**
**13, rue des Dames**
**F-91350 Yerres (FR)**
Titulaire : **Freyne, Jacques**
**3bis rue du Rôle**
**F-91800 Brunoy (FR)**
Titulaire : **Perron, René**
**134, avenue Jean-Jaurès**
**F-93500 Pantin (FR)**

(72) Inventeur : **Freyne, Claude**
**13, rue des Dames**
**F-91350 Yerres (FR)**
Inventeur : **Freyne, Jacques**
**3bis rue du Rôle**
**F-91800 Brunoy (FR)**
Inventeur : **Perron, René**
**134, avenue Jean-Jaurès**
**F-93500 Pantin (FR)**

(74) Mandataire : **Schrimpf, Robert et al**
**Cabinet Regimbeau 26, Avenue Kléber**
**F-75116 Paris (FR)**

## Description

La présente invention est relative à un procédé et à un dispositif de traitement de l'eau du réseau de distribution par impulsions électriques à durée modulée, afin d'éviter ou réduire fortement le phénomène d'entartrage des canalisations d'un réseau.

Les traitements physiques des eaux de réseaux de distribution par impulsions électriques ont fait l'objet jusqu'à ce jour de nombreux travaux. En particulier, il a été proposé par les demanderesses, en vue d'éviter le phénomène d'entartrage des canalisations, d'effectuer un traitement de l'eau à distribuer par des impulsions électriques à gradation de puissance. Selon un aspect plus particulier du mode opératoire décrit dans le brevet européen 0 060 193 au nom des demanderesses, la puissance des impulsions électriques ainsi appliquées à l'eau du réseau de distribution est asservie au débit d'eau afin de permettre un traitement plus homogène en fonction des conditions d'utilisation par chaque abonné du réseau de distribution.

Bien que le procédé et le dispositif précédemment décrit donne toute satisfaction dans les conditions habituelles d'environnement, les demanderesses ont pû constater une diminution des performances normalement obtenues lors de la mise en oeuvre du traitement précité en fonction des conditions de température d'environnement, en hiver par exemple où la température de l'eau des réseaux de distribution ne dépasse guère 10°C, le phénomène d'entartrage des installations de production apparaissant plus aigu au niveau de l'eau chaude.

La présente invention a pour but de remédier aux inconvénients précités, par la mise en oeuvre d'un procédé et d'un dispositif de traitement du type précité dans lequel la durée des impulsions électriques appliquées à l'eau du réseau de distribution est modulée en durée en fonction de la température.

Un autre objet de la présente invention est la mise en oeuvre d'un procédé et d'un dispositif de traitement de l'eau par impulsions électriques permettant un traitement optimalisé en fonction des paramètres physiques de l'eau tels que la conductivité électrique de celle-ci.

Le procédé de traitement physique de l'eau du réseau de distribution objet de l'invention consiste à appliquer à l'eau du réseau de distribution une série d'impulsions électriques dites impulsions de traitement de fréquence de récurrence proportionnelle au débit de l'eau du réseau de distribution. Il est remarquable en ce que la durée des impulsions est modulée en fonction de la température de l'eau de façon à provoquer, pendant la durée de maintien de chaque impulsion de traitement, une floculation microscopique du carbonate de calcium contenu dans l'eau et la diffusion des flocons microscopiques de carbonate de calcium en dehors de la durée de maintien de l'impulsion.

Le dispositif de traitement de l'eau du réseau de distribution par impulsions électriques à durée modulée objet de l'invention comprend une chambre de traitement de l'eau dans laquelle l'eau du réseau de distribution est en circulation, des moyens de mesure du débit d'eau et des moyens générateurs d'impulsions électriques appliquées à la chambre de traitement et dont la fréquence de récurrence est proportionnelle au débit d'eau mesuré. Il est remarquable en ce qu'il comporte en outre des moyens de mesure de la température de l'eau et des moyens de modulation de la durée des impulsions en fonction de la température de l'eau, de façon à provoquer, pendant la durée de maintien de chaque impulsion, une floculation microscopique du carbonate de calcium contenu dans l'eau et la diffusion des flocons microscopiques de carbonate de calcium en dehors de la durée de maintien de l'impulsion.

Le procédé et le dispositif de l'invention trouvent application au traitement de l'eau du réseau de distribution chez l'abonné en vue de réduire fortement ou pratiquement supprimer les risques d'entartrage des installations de l'abonné, telles que échangeurs de chaleur, circuits de chauffage, circuits de production d'eau chaude.

Le procédé et le dispositif objets de l'invention seront mieux compris à la lecture de la description et à l'observation des dessins ci-après dans lesquels :

- la figure 1 représente la forme d'onde d'une impulsion sur une période de récurrence de celle-ci,
- la figure 2a représente la loi de variation de la durée de chaque impulsion, en fonction de la température de l'eau, et la figure 2b représente la loi de variation de la durée de chaque impulsion en fonction de la conductivité électrique de l'eau à traiter,
- la figure 3 représente un schéma synoptique des blocs fontionnels constitutifs du dispositif de traitement de l'eau du réseau de distribution par impulsions électrique à durée modulée selon l'invention,
- la figure 4 représente un mode de réalisation particulier non limitatif des moyens de mesure de débit, des moyens de mesure de température de l'eau, des moyens de mesure de la conductivité de l'eau et des moyens de modulation de la durée des impulsions en fonction de la température de l'eau,
- la figure 5 représente un mode de réalisation non limitatif avantageux des moyens générateurs des impulsions de traitement,
- la figure 6 représente un mode de réalisation particulier non limitatif de circuits plus particulièrement destinés à assurer l'affichage des paramètres d'état du dispositif,
- la figure 7 représente en vue en coupe selon un plan de symétrie longitudinal un mode de réalisation non limitatif d'une chambre de traitement conforme à l'objet de la présente invention.

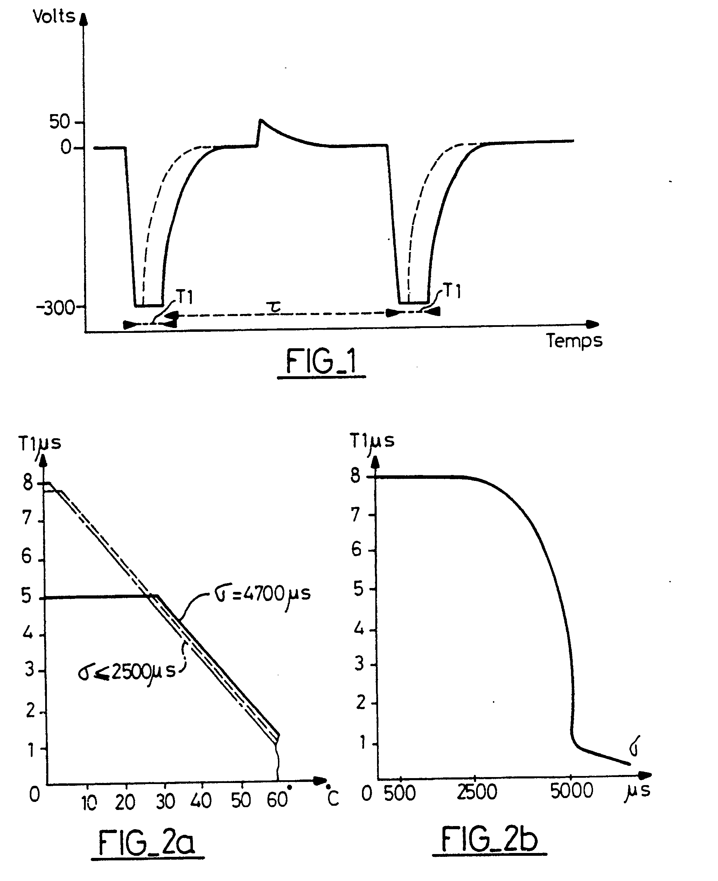

Le procédé de traitement de l'eau du réseau de distribution par impulsions électriques à durée modulée conforme à l'objet de la présente invention sera décrit avec les figures 1 et 2a et 2b.

Le problème de l'entartrage des canalisations ou organes de commande de réseaux de distribution d'eau domestiques ou industriels est lié à celui de l'équilibre calcocarbonique dans l'eau.

La solubilité du carbonate de calcium est régie par la loi d'action de masse, laquelle définit une constante d'équilibre dont la valeur dépend de la température et du degré d'ionisation de l'eau. Lorsque le produit des concentrations en ions calcium et bicarbonate est inférieur à cette constante, l'eau n'est pas saturée et est dite agressive car elle peut dissoudre du carbonate de calcium solide. Si ce produit est supérieur à cette constante, l'eau est au contraire susceptible d'engendrer un dépôt de carbonate de calcium et est dite calcifiante.

Les diverses constantes qui déterminent les équilibres ioniques varient avec la température de l'eau et la solubilité du carbonate de calcium diminue lorsque la température augmente. Ainsi, une eau peut être agressive à froid et calcifiante après chauffage.

Une courbe d'équilibre calcocarbonique permet de définir les conditions d'équilibre entre une eau et du carbonate de calcium solide, mais ne permet pas de prévoir les conditions d'apparition de celui-ci sur la surface d'un matériau autre que le carbonate de calcium. L'apparition d'une particule de carbonate de calcium, désignée par germe, à la surface d'une paroi métallique nécessite que le produit des concentrations en ions calcium et en bicarbonate soit environ quarante fois supérieur à la constante d'équilibre.

Le procédé objet de l'invention permet ainsi qu'il sera décrit ci-après dans la description, suite à un déplacement des équilibres carboniques de l'eau, compte-tenu notamment de la température de celle-ci, de rendre cette eau localement calcifiante par application d'impulsions électriques appropriées.

Le procédé de traitement physique de l'eau du réseau de distribution selon l'invention, consiste à appliquer à l'eau du réseau de distribution une série d'impulsions électriques d'amplitude constante et de fréquence de récurrence directement proportionnelle au débit de l'eau du réseau de distribution. A titre d'exemple non limitatif ainsi que représenté en figure 1, l'amplitude des impulsions est choisie de façon à appliquer à l'eau à traiter une différence de potentiel électrique de 50 Volts par centimètre d'épaisseur d'eau, les impulsions ayant une amplitude de 300 Volts. Conformément au procédé objet de l'invention, la durée des impulsions est modulée en fonction de la température de l'eau, de façon à provoquer pendant la durée de maintien de chaque impulsion, une floculation microscopique du carbonate de calcium contenu dans l'eau et la diffusion dans celle-ci des flocons microscopiques de carbonate de calcium en dehors de la durée de maintien de l'impulsion.

L'application d'une différence de potentiel ou champ électrique entre deux électrodes a pour effet de créer :

– une cathode au voisinage de laquelle ont lieu des réactions de réduction et en particulier celles de l'oxygène dissous

$$O_2 + 2H_2O + 4e^- \rightarrow 4OH^-$$

– d'une anode, au voisinage de laquelle se produisent des réactions d'oxydation

$$2H_2O \rightarrow O_2 + 4H^+ + 4e^-$$

Les ions OH$^-$ produits au voisinage de la cathode entraînent un déplacement des équilibres carboniques, ce qui produit une augmentation locale de la concentration en ions carbonates CO$_3^-$, l'eau pouvant devenir fortement calcifiante. Les germes de carbonate de calcium solide peuvent alors apparaître. L'application d'impulsions à durée modulée permet ainsi la production de germes de carbonate de calcium pendant la durée de l'impulsion et la floculation en flocons microscopiques. Les flocons microscopiques ou germes diffusent dans l'eau en dehors de la durée de maintien de l'impulsion. L'existence dans l'eau, sous l'effet du traitement de germes ou flocons microscopiques de carbonate de calcium perturbe la formation de nouveaux germes à partir de la paroi des canalisations car l'énergie de précipitation ou de floculation sur un germe ou flocon microscopique existant dans l'eau est plus faible que l'énergie de formation d'un germe sur la paroi des canalisations d'où l'effet inhibiteur du phénomène d'entartrage.

Selon une autre caractéristique avantageuse du procédé objet de l'invention, la durée de chaque impulsion est inversement proportionnelle à la température de l'eau ainsi que représenté en figure 2a. Sur cette figure l'axe des abscisses est gradué en °C et l'axe des ordonnées en microsecondes. La durée des impulsions est comprise entre 5° et 60°.

Ainsi qu'on l'a également représenté en figure 2a la durée de chaque impulsion de traitement est modulée en fonction de la conductivité électrique de l'eau en vue de permettre une floculation microscopique du carbonate de calcium dans des conditions sensiblement stables de champ électrique appliqué à l'eau. Par conditions sensiblement stables de champ électrique appliqué à l'eau on entend notamment l'absence de claquage diélectrique et prise en compte par l'intermédiaire de la conductivité électrique précitée de l'eau de l'ionisation de celle-ci et notamment de la concentration en ions carbonates par exemple. Ainsi, sur la figure 2a on a représenté différentes courbes donnant le temps de maintien T1 des impulsions en fonction de la température pour diverses conductibilités électriques, la courbe en traits mixtes correspondant à une conductivité électrique σ ≤ 2500 μ S, la courbe en continu correspondant au contraire à une eau de conductibilité σ = 4700 μ S avec cependant une limitation de temps de maintien T1 à 5 microsecondes pour des températures de l'eau inférieures à 30°, afin d'éviter justement le risque d'apparation de claquage diélectrique de l'eau traitée.

Ainsi qu'on l'a représenté en figure 2b la durée de chaque impulsion de traitement c'est-à-dire le temps de maintien T1 de celle-ci est ainsi modulée selon une loi continument décroissante en fonction de la conductivité électrique de l'eau, conductivité électrique σ. La durée de chaque impulsion de traitement est ainsi comprise entre une et 8 microsecondes pour une conductivité électrique de l'eau comprise entre 5000 μS et 2500 μS, la durée T1 des impulsions de traitement étant modulée en fonction de cette conductivité ainsi que représenté en figure 2b.

En outre, ainsi qu'on l'a représenté en figure 1, chaque impulsion de traitement, impulsion négative, est suivie d'une impulsion de polarité opposée, impulsion positive, de façon à favoriser le décollement de germes ou flocons microscopique de carbonate de calcium susceptibles de se former sur la paroi de l'électrode jouant le rôle de cathode sur laquelle les impulsions de traitement négatives sont appliquées. De manière avantageuse, les impulsions négatives ont une amplitude de 300 Volts environ et les impulsions positive de polarité opposée ont une amplitude limitée à 50 Volts par exemple.

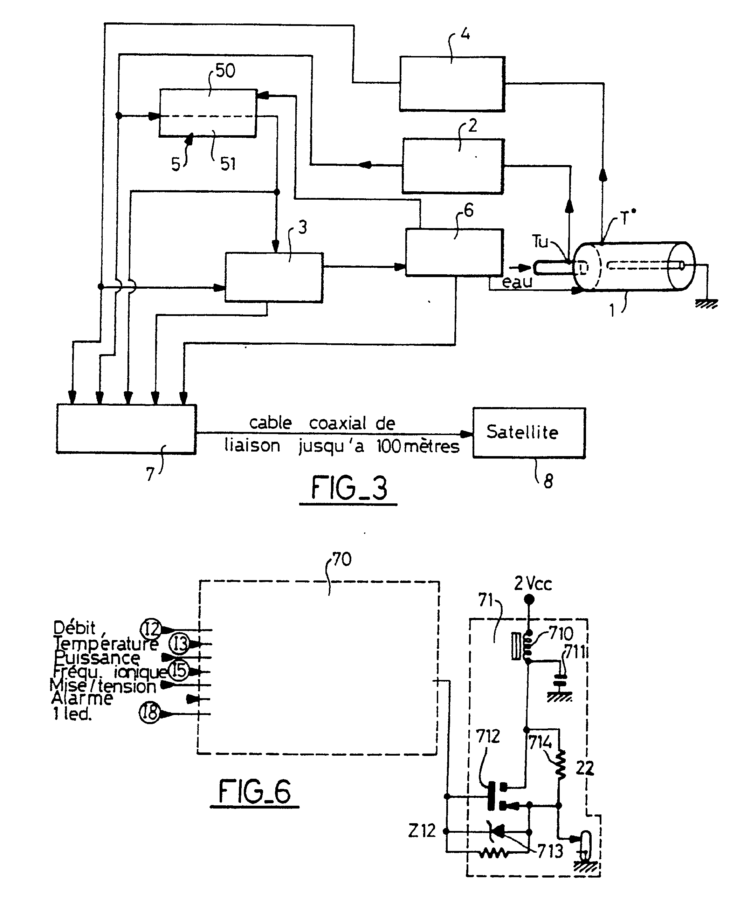

Une description plus détaillée d'un dispositif de traitement de l'eau du réseau de distribution par impulsions électriques conformément au procédé précédemment décrit sera maintenant donnée en liaison avec la figure 3.

Selon la figure précitée, le dispositif de traitement de l'eau du réseau de distribution par impulsions électriques conformément à l'objet de l'invention comprend une chambre 1 de traitement de l'eau dans laquelle l'eau du réseau de distribution est en circulation. Des moyens 2 de mesure du débit de l'eau et des moyens 3 générateurs d'impulsions électriques, désignées par les impulsions de traitement, sont prévus, les impulsions électriques de traitement étant appliquées à la chambre de traitement 1. La fréquence de récurrence des impulsions de traitement, soit en définitive la période τ de récurrence de ces impulsions, est proportionnelle au débit d'eau mesuré.

Ainsi qu'on l'a en outre représenté en figure 3, le dispositif objet de l'invention comporte de manière particulièrement avantageuse pour la mise en oeuvre du procédé précédemment décrit des moyens 4 de mesure de la température de l'eau, ces moyens délivrant un signal représentatif de cette température.

Des moyens 5 de modulation de la durée des impulsions de traitement en fonction de la température sont prévus de façon à provoquer pendant la durée de maintien de chaque impulsion de traitement, durée notée T1, une floculation microscopique du carbonate de calcium contenu dans l'eau et la diffusion des flocons microscopiques de carbonate de calcium ainsi formés en dehors de la durée de maintien de l'impulsion de traitement. La diffusion des flocons microscopiques précités s'effectue dans l'eau distribuée par le réseau, ces flocons restant en suspension dans celui-ci.

En outre, le dispositif objet de l'invention comporte des moyens 6 de mesure de la conductivité électrique de l'eau et des moyens notés 50 de modulation de la durée des impulsions de traitement en fonction de la conductivité électrique de l'eau de façon à provoquer pendant la durée de maintien de chaque impulsion de traitement la floculation microscopique précitée du carbonate de calcium dans des conditions sensiblement stables de champ électrique appliquées à l'eau, et en particulier en l'absence de claquage diélectrique. La modulation de la durée de maintien des impulsions de traitement T1 en fonction de la conductivité électrique de l'eau traitée permet de prendre en compte le degré d'ionisation de l'eau et la durée de chaque impulsion de traitement, ou temps de maintien T1, est ainsi modulée selon une loi continument décroissante en fonction de la conductivité électrique de l'eau, conductivité notée σ. La durée de chaque impulsion de traitement est comprise entre 1 microseconde et 8 microsecondes pour une conductivité électrique de l'eau comprise entre 5000 μS et 2500 μS.

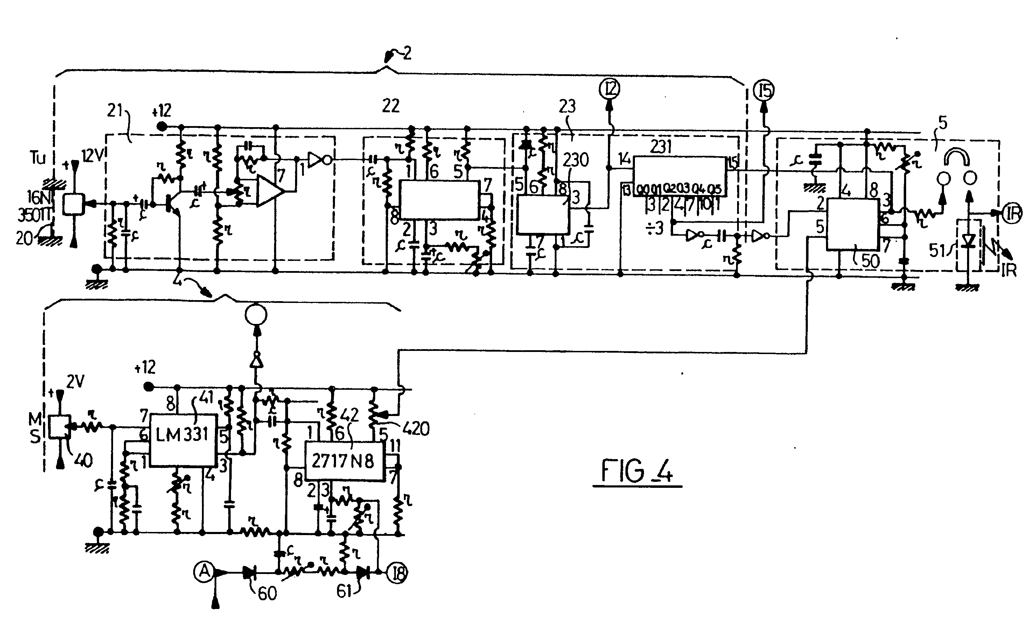

Une description plus détaillée des différents organes précédemment décrits en liaison avec la figure 3 sera donnée en relation avec la figure 4.

Sur la figure 4 à titre de simplification, les résistances notées r et les capacités notées c désignent des résistances et des capacités nécessaires à la mise en oeuvre de composants électroniques normalement disponibles dans le commerce, ces résistances et ces capacités ne jouant aucun rôle fonctionnel particulier si ce n'est celui de la mise en oeuvre et en particulier de la polarisation convenable des circuits ou composants électroniques précités.

Ainsi qu'on l'a représenté sur cette figure, les moyens 2 de mesure du débit d'eau comprennent de façon non limitative une turbine Tu disposée dans la chambre de traitement 1 ainsi qu'il sera décrit plus en détail ultérieurement dans la description. Ils comportent également un capteur de vitesse 20 couplé à la turbine Tu, ce capteur de vitesse délivrant un signal périodique dont la fréquence est proportionnelle au débit d'eau. Le capteur de vitesse 20 peut être constitué par un détecteur à effet Hall commercialisé en France par la société SPRAGUE sous la référence UGN 3501T par exemple. Le capteur de vitesse délivre un signal périodique dont la fréquence est proportionnelle au débit d'eau, ce signal étant délivré à un étage d'amplification 21. L'étage d'amplification 21 est constitué par des éléments amplificateurs à transistors ou à amplificateurs opérationnels ainsi que représenté sur la figure 4 mais ne sera pas décrit en détail car la réalisation de cet amplificateur est à la portée de l'homme de métier.

Les moyens 2 de mesure du débit d'eau comprennent en outre des moyens 22 de conversion fréquence/tension permettant de délivrer une tension continue proportionnelle au débit d'eau. Les moyens 22 de conversion fréquence/tension peuvent avantageusement être constitués par un circuit convertisseur commercialisé sous la référence 2917 N8 par la société NATIONAL SEMICONDUCTORS.

Bien entendu, les moyens 22 de conversion fréquence/tension reçoivent le signal amplifié délivré par l'étage amplificateur 21.

En outre, les moyens 2 de mesure du débit d'eau comportent ainsi que représenté en figure 4 des moyens oscillateurs à fréquence commandée notés 23, les moyens oscillateurs à fréquence commandée recevant la tension continue proportionnelle au débit d'eau et délivrant un signal de commande dont la fréquence de récurrence est proportionnelle au débit d'eau. Les moyens oscillateurs à fréquence commandée 23 peuvent ainsi que représentés en figure 4 être constitués par un circuit intégré commercialisé sous la référence 566 par la société NATIONAL SEMICONDUCTORS. Ce circuit oscillateur à fréquence commandée noté 230 est un circuit diviseur 231 permettant en définitive de délivrer le signal de commande dont la fréquence de récurrence est proportionnelle au débit d'eau. Le circuit diviseur 231 peut être réalisé par un circuit commercialisé sous la référence 4017 par la société NATIONAL SEMICONDUCTORS.

Une description plus détaillée des moyens 5 de modulation des impulsions de traitement en fonction de la température notamment sera donnée en liaison avec cette même figure 4.

Selon la figure précitée, les moyens 5 de modulation sont constitués par un circuit 50 variateur de rapport cyclique des impulsions de commande, les impulsions de commande étant bien entendu synchrones des impulsions de traitement ainsi qu'il sera expliqué ultérieurement dans la description. Ainsi, le rapport cyclique des impulsions de traitement est défini par le rapport $\frac{T1}{\tau}$ et le rapport cyclique des impulsions de commande est défini de la même façon. Le circuit 50 variateur de rapport cyclique peut avantageusement être constitué par un circuit commercialisé sous la référence LM555 par la Société NATIONAL SEMICONDUCTORS. Il reçoit sur une première entrée le signal de commande délivré par les moyens oscillateurs à fréquence commandée 23, sur l'entrée notée 3 du circuit précité, et sur une deuxième entrée dite entrée de commande de rapport cyclique, entrée notée 5, le signal représentatif de la température de l'eau délivré par les moyens 4 de mesure de température, ainsi qu'il sera décrit ci-après dans la description. Une borne de sortie du circuit 50 variateur de rapport cyclique est reliée à des moyens émetteurs optoélectroniques 51 constitués par exemple par une photodiode à rayonnement infrarouge pour assurer la transmission des impulsions de commande à durée modulée en fonction de la température. Bien entendu, l'utilisation de moyens émetteurs optoélectroniques 51 n'est pas limitative mais celle-ci permet d'assurer un découplage galvanique convenable avec la partie à haute tension du dispositif constituée par le générateur d'impulsions de traitement, lequel sera décrit ultérieurement dans la description.

Une description plus détaillée des moyens 4 de mesure de la température de l'eau sera maintenant donnée également en liaison avec la figure 4.

Conformément à la figure précitée, les moyens 4 de mesure de la température de l'eau comportent avantageusement une sonde 40 de mesure de température placée dans la chambre de traitement 1, cette sonde délivrant un signal de tension continue représentative de la température de l'eau. La sonde de mesure de température peut avantageusement être constituée par une sonde commercialisée par la société NATIONAL SEMICONDUCTORS sous la référence LM35.

En outre, les moyens 4 de mesure de la température comportent également un oscillateur 41 à fréquence commandée, cet oscillateur recevant sur une entrée de commande le signal de tension continue représentatif de la température de l'eau et délivre un signal périodique dont la fréquence est proportionnelle à la température de l'eau. L'oscillateur à fréquence commandée 41 peut avantageusement être constitué par un composant commercialisé sous la référence LM331 par la Société NATIONAL SEMICONDUCTORS. Le signal continu délivré par la sonde 40 est appliqué sur l'entré n°7 du circuit précité.

En outre, les moyens 4 de mesure de température comportent enfin un circuit 42 convertisseur fréquence/tension recevant le signal périodique délivré par l'oscillateur à fréquence commandée 41 et délivrant sur une borne de sortie une tension continue constituant le signal représentatif de la température de l'eau délivré par les moyens 4 de mesure de température. A titre d'exemple non limitatif, ainsi que représenté en figure 4, le circuit 42 convertisseur fréquence/tension peut être constitué par un circuit commercialisé sous la référence 2917 N8 par la Société NATIONAL SEMICONDUCTORS. La borne de sortie délivrant le signal représentatif de la température de l'eau est alors la borne n°5.

La borne de sortie n°5 du circuit constituant circuit 42 convertisseur de fréquence/tension des moyens de mesure de température 4 est alors connectée par l'intermédiaire d'un potentiomètre de réglage noté 420 à la borne d'entrée de polarisation 5 du circuit 50 variateur de rapport cyclique des impulsions de commande.

Ainsi, le mode de réalisation représenté en figure 4 des moyens de mesure de débit 2, des moyens 4 de mesure de température et des moyens 5 de modulation de la durée des impulsions de traitement en fonction de la température, permet de réaliser une modulation de la durée T1 des impulsions de traitement, bien entendu par la modulation correspondante du rapport cyclique des impulsions de commande, en fonction de la température de l'eau.

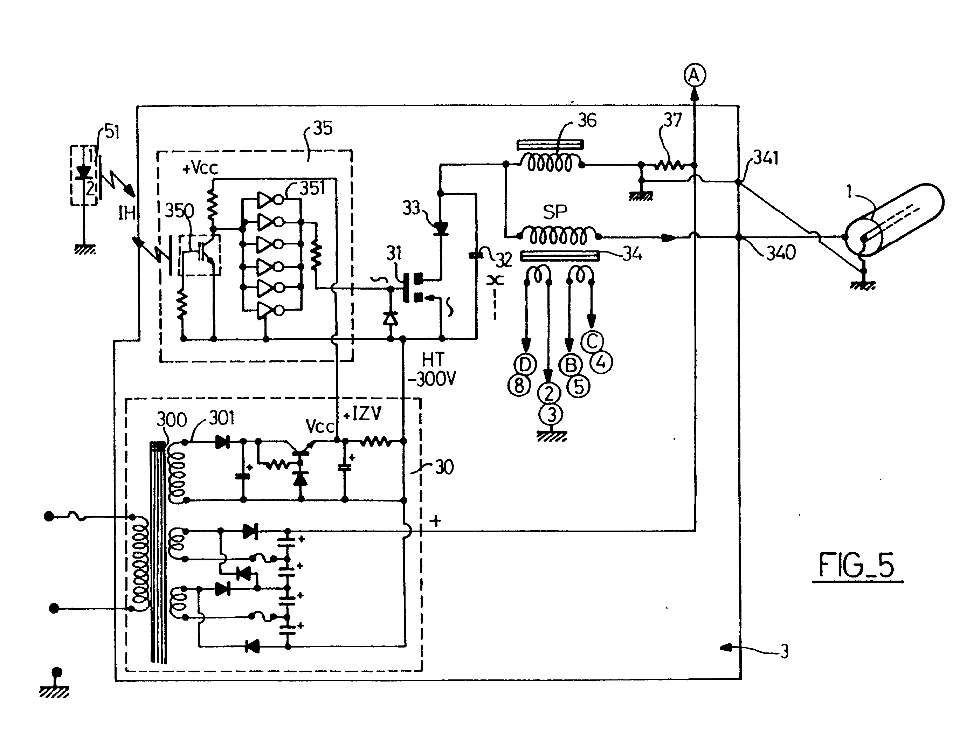

Une description plus détaillée des moyens 3 générateurs d'impulsions électriques de traitement sera maintenant donné en liaison avec la figure 5.

Selon la figure précitée, les moyens 3 générateurs d'impulsions comportent avantageusement des moyens 30 générateurs d'une haute tension continue d'alimentation. Les moyens 30 précités permettent d'engendrer une tension de l'ordre de 300 Volts et peuvent être constitués par tout système d'alimentation redressée permettant d'engendrer une tension continue à potentiel flottant par rapport à la masse. Par potentiel flottant par rapport à la masse on comprend un système ainsi que représenté en figure 3 dans lequel les enroulements secondaires du transformateur d'alimentation, transformateur 300, ne sont pas connectés à un potentiel de référence tel que la masse, le potentiel positif, borne + et négatif, borne – de la tension redressée délivrée par les moyens 30 générateurs de haute tension continue n'étant pas définis par rapport à la masse du dispositif. Ainsi l'amplitude de 300 Volts de la tension continue engendrée par les moyens 30 générateurs de haute tension continue est définie entre la borne positive et la borne négative de sortie des moyens 30 générateurs précités. Une description détaillée des moyens 30 générateurs de haute tension continue n'est pas nécessaire dans la mesure où ce type d'alimentation haute tension continue est connu de l'homme de métier.

En outre, les moyens générateurs d'impulsions électriques de traitement comportent des moyens de commutation 31 constitués par un transistor C-MOS de puissance, ces moyens de commutation étant connectés en parallèle sur une capacité 32, la borne de source du transistor de commutation MOS de puissance étant connectée à l'une des bornes de la capacité et la borne de drain du transistor de commutation 31 étant connectée à l'autre borne de la capacité 32 par l'intermédiaire d'une diode de protection notée 33. Les moyens de commutation 31 constitués par le transistor MOS de commutation comportent une borne d'entrée de commande constituée par la borne de grille du transistor MOS. La borne de source du transistor MOS de commutation 31 est connectée à la borne négative des moyens 30 générateurs de haute tension continue d'alimentation.

Les moyens 3 générateurs d'impulsions de traitement comportent également un circuit de charge de la capacité 32 permettant d'engendrer les impulsions de traitement. Le circuit de charge comporte un transformateur 34 dont l'enroulement primaire est en série avec une borne de connection 340 permettant de connecter la chambre de traitement 1 et en particulier l'électrode périphérique de celle-ci, ainsi qu'il sera décrit ultérieurement dans la description, en série dans le circuit de charge de la capacité 32. Par connexion en série de la chambre de traitement, ainsi que représenté en figure 5, on comprendra que la résistance équivalente comprise entre l'électrode périphérique et l'électrode centrale de la chambre de traitement, résistance équivalente constituée par l'eau à traiter, est connectée en série entre la borne de connexion 340 précitée et par exemple une autre borne 341, laquelle est reliée au potentiel de référence de masse du dispositif. Le circuit de charge de la capacité 32 est alors refermé par l'intermédiaire d'une résistance 37 dont la fonction sera explicitée ultérieurement dans la description, cette résistance étant connectée à la tension de référence de masse du dispositif d'une part et à la borne positive de sortie des moyens générateurs de haute tension d'alimentation 30.

En outre, les moyens 3 générateurs d'impulsions électriques de traitement comportent des moyens optoélectroniques récepteurs 35, lesquels sont bien entendu couplés aux moyens optoélectronique émetteurs 51 des moyens de modulation 5 de la durée des impulsions de commande. Les moyens optoélectroniques récepteurs 35 comprennent par exemple un phototransistor récepteur 350 auquel est connecté sur l'électrode de collecteur de celui-ci une série d'inverseurs 351 afin d'obtenir une sortie basse impédence du phototransistor 350. Bien entendu, la sortie basse impédence de l'ensemble des circuits 351 est connectée à la borne de grille constituant borne d'entrée de commande des moyens de commutation constitués par le transistor C-MOS de commutation 31. On notera en outre que, outre les enroulements nécessaires pour engendrer la haute tension continue redressée HT égale à 300 Volts, le transformateur d'alimentation 300 comporte un enroulement 301 auxiliaire, lequel permet d'engendrer une tension continue d'alimentation notée VCC, laquelle permet d'alimenter notamment le phototransistor 350.

Le fonctionnement du dispositif tel que représenté en figures 4 et 5 est le suivant :

– la fréquence de récurrence des impulsions de commande, et en définitive la fréquence de récurrence des impulsions de traitement est commandée par la mesure du débit effectuée par la turbine Tu et par la chaîne constituant les moyens 2 de mesure de débit. Pour un débit d'eau stable, la fréquence de récurrence des impulsions de commande et des impulsions de traitement est fixe et les impulsions de commande transmises par les moyens modulateurs de durée des impulsions constituant variateur de rapport cyclique des impulsions de commande permet alors, à partir de l'information transmise par les moyens 4 de mesure de température, de moduler en conséquence la durée de maintient T1 des impulsions de traitement par l'intermédiaire de la commande du rapport cyclique des impulsions de commande. Les impulsions de commande sont transformées en impulsions lumineuses par la diode électroluminescente 51 et ces impulsions lumineuses sont reçues par le phototransistor 350 couplé à la diode électroluminescente précitée. Les impulsions électriques délivrées par le phototransistor 350 sont alors transmises par les circuits basse impédance 351 à la borne de commande des moyens de commutation 31, lesquels permettent alors la décharge quasi instantannée en quelques microsecondes de la capacité 32 par mise en cours circuit des moyens de commutation ou transistors C-MOS 31. La mise en court-circuit des transistors 31 de commutation et de la capacité 32 est maintenue pendant le temps de maintien T1 formant ainsi le temps de maintien de l'impulsion de traitement. Sur rebasculement de l'impulsion de commande, le transistor C-MOS de commutation 31 est à nouveau bloqué et la capacité 32 se recharge avec une constante de temps correspondant sensiblement à celle de cette capacité 32 connectée en série avec la résistance équivalente de la chambre de traitement 1, la résistance de faible valeur 37 et la résistance de l'enroulement primaire du transformateur 34. On notera que le transformateur 34 est utilisé afin d'obtenir des informations sur les enroulements secondaires de celui-ci, relatives à l'intensité du courant électrique transitant dans la chambre de traitement 1 en vue d'affichage des paramètres d'état du dispositif au cours du traitement de l'eau ainsi qu'il sera décrit ultérieurement dans la description.

Afin d'engendrer l'impulsion de polarité opposée à l'impulsion de traitement, impulsion de polarité opposée suivant chaque impulsion de traitement, les moyens générateurs 3 d'impulsion de traitement comportent en outre connectés en parallèle sur le circuit de charge une self inductance 36 constituant avec la capacité 32 un circuit résonnant amorti. Ce circuit résonnant amorti permet d'engendrer suite à la charge de la capacité 32 l'impulsion de polarité opposée à l'impulsion de décharge de la capacité formant l'impulsion de traitement. Le circuit résonnant amorti ainsi constitué a pour effet d'engendrer une oscillation amortie dont le premier maximum se superpose à la courbe de charge de la capacité 32 pour constituer ainsi le pic de polarité opposée à l'impulsion de traitement.

Une description plus détaillée des moyens 6 de mesure de la conductivité électrique de l'eau sera maintenant donnée en liaison avec la figure 5 et la figure 4.

Selon la figure 5 précitée, les moyens 6 de mesure de la conductivité électrique de l'eau sont constitués par la résistance 37 de faible valeur représentée en figure 5. Cette résistance permet d'engendrer un signal de tension proportionnel au courant électrique circulant dans la chambre de traitement 1.

En outre, ainsi que représenté en figure 4, les moyens 6 de mesure de la conductivité électrique de l'eau comportent un circuit redresseur noté 60, 61 constitué par des diodes, ce circuit redresseur étant connecté aux bornes de la résistance 37 et permettant d'engendrer une tension continue proportionnelle au courant électrique circulant dans la chambre de traitement. Le circuit redresseur 60, 61 est connecté à une entrée de commande de polarisation du circuit 42 convertisseur de fréquence/tension des moyens de mesure de la température de l'eau 4.

Le fonctionnement du dispositif tel que représenté en figure 4 et 5 est le suivant :
– lors de la variation de la conductivité électrique σ de l'eau, les impulsions de traitement étant d'amplitude sensiblement constante égale à 300 Volts, le courant circulant dans le circuit de charge de la capacité 32 et en définitive dans la chambre de traitement 1 varie en conséquence et produit au niveau des bornes de la résistance de faible valeur 37 une différence de potentiel correspondante et représentative de cette intensité. Le circuit redresseur 60, 61 délivre alors une tension redressée continue proportionnelle au courant électrique circulant dans la chambre de traitement. Cette tension a pour effet de modifier la polarisation du convertisseur fréquence/tension 42 des moyens de mesure de la température de l'eau, ce qui a pour effet de modifier la tension de sortie délivrée par le potentiomètre 420, tension destinée à moduler le rapport cyclique des impulsions de commande au niveau du circuit variateur de rapport cyclique des impulsions de commande 50.

Ainsi, le mode de réalisation des figures 4 et 5 permet de réaliser une modulation de la durée T1 de maintien des impulsions de traitement conformément aux lois de variations représentées aux figures 2a et 2b précédemment décrites dans la description.

Afin de faciliter l'utilisation par l'abonné du dispositif objet de l'invention, celui-ci comporte ainsi que représenté en figure 3 des moyens d'affichage 7, 8 des paramètres de fonctionnement du dispositif, paramètres tels que le débit d'eau, la température de l'eau, la fréquence des impulsions de traitement, la mise sous tension du dispositif ou la mise hors tension de celui-ci, une alarme de mise en défaut de dispositif par exemple.

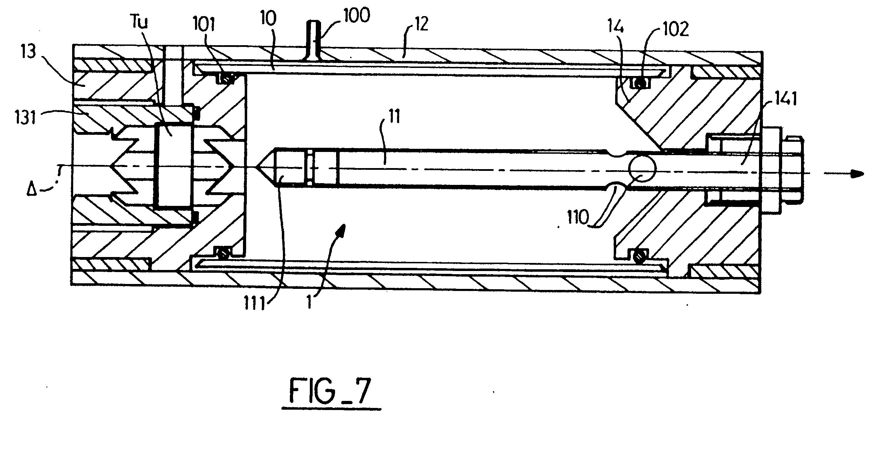

Dans ce but, les moyens d'affichage précités, ainsi que représentés en figure 6, comportent par exemple un multiplexeur 70 recevant les signaux représentatifs des paramètres précités en parallèle. Ces signaux peuvent avantageusement être constitués par les signaux de fréquence 12, 13 délivrés respectivement par l'oscillateur à fréquence commandée 230 et par l'oscillateur à fréquence commandée 41, ces signaux étant respectivement représentatifs du débit d'eau et de la température de l'eau. Les autres signaux peuvent être constitués également par des signaux de fréquence correspondants mais ces signaux ne seront pas décrits et les circuits correspondants susceptibles de les engendrer ne seront pas non plus décrits car ils correspondent à des modes de réalisation à la portée de l'homme de métier. Les multiplexeurs 70 délivrent des signaux codés en séquence série sous forme d'impulsions codées. Le multiplexeur 70 ne sera pas décrit car il correspond à un multiplexeur de type classique, lequel est parfaitement connu de l'homme de métier dans son principe.

En outre, les moyens d'affichage 7, 8 comportent des moyens 71 de mise en forme des impulsions codées. Les moyens de mise en forme des impulsions codées reçoivent les signaux délivrés par le multiplexeur 70, c'est-à-dire les impulsions codées, et ils comportent, relié à une borne d'alimentation de tension continue 2VCC par exemple par l'intermédiaire d'une self inductance assurant un filtrage avec une capacité 711, un transistor de commutation de type C-MOS noté 712 dont la borne de grille est connectée à la borne d'entrée des impulsions codées, dont la borne de drain est connectée à la self inductance 710 et dont la borne de source est connectée à la borne de sortie des impulsions mises en forme. Une diode Zéner 713 est connectée en parallèle entre la borne de source et la borne de grille du transistor de commutation 712. Une résistance de charge 714 est connectée entre la borne de drain et la borne de source du transistor de commutation 712. Le circuit de mise en forme permet de réduire le niveau des impulsions codées à un niveau de l'ordre de 2 Volts par exemple.

En outre, un organe d'affichage satellite 8 ainsi que représenté en figure 1 est prévu. L'organe d'affichage satellite 8 comporte un circuit décodeur des impulsions codées, lequel ne sera pas décrit car il correspond à un système décodeur connu pour le décodage d'impulsions multiplexées codées. L'organe d'affichage satellite 8 est relié aux moyens de mise en forme 71 par l'intermédiaire d'une prise coaxiale par exemple. Ainsi, l'organe d'affichage satellite 8 peut avantageusement être soit enfiché directement sur la prise coaxiale, l'organe d'affichage satellite 8 étant alors solidaire du dispositif et en particulier du coffret de celui-ci ou au contraire être relié aux moyens de mise en forme 71 par l'intermédiaire d'un câble coaxial, le câble coaxial pouvant être un câble coaxial de grande longueur, jusqu'à 100 mètres. Ainsi, le dispositif objet de l'invention peut être installé dans les dépendances de la maison d'un abonné domestique et l'organe d'affichage satellite peut au contraire être installé dans un vestibule ou dans un endroit approprié de la zone d'habitation.

Une description plus détaillée de la chambre de traitement 1 sera maintenant donnée en liaison avec la figure 7.

Selon la figure précitée, la chambre de traitement 1 comporte une électrode cylindrique périphérique 10 à laquelle sont appliquées les impulsions de traitement. Elle comporte également une électrode cylindrique centrale 11 reliée à la tension de référence ou masse du dispositif. Une enveloppe 12 en matériau isolant électrique entoure l'électrode cylindrique périphérique 10 et constitue une enceinte étanche pour l'eau à traiter. En outre, un premier 13 et deuxième 14 blocs d'extrémités constituent parois frontales de la chambre de traitement, chaque bloc d'extrémité 13 et 14 étant muni d'une canalisation centrale 131, 141 d'arrivée ou de départ de l'eau de la chambre de traitement. L'étanchéité de la chambre de traitement peut être assurée entre l'électrode périphérique 10 et les premier et deuxième blocs d'extrémités 13 et 14 par l'intermédiaire de joints d'étanchéité 101, 102. L'enveloppe en matériau isolant électrique peut être constituée avantageusement par une enveloppe en polychlorure de vynile ou PVC.

Ainsi qu'on l'a représenté en outre en figure 7, le bloc d'extrémité 13 comportant la canalisation centrale d'arrivée 131 est muni sur cette canalisation de la turbine Tu de mesure du débit d'eau.

En outre, l'électrode cylindrique centrale 11 présente une extrémité solidaire du deuxième bloc d'extrémité 14. Selon un mode de réalisation avantageux non limitatif, l'électrode centrale est partiellement creuse pour constituer canalisation de départ 141 de l'eau, cette électrode creuse étant munie au voisinage du deuxième bloc d'extrémité d'orifices traversants 110 mettant en communication la chambre de traitement 1 et la canalisation de départ 141. L'autre extrémité 111 de l'électrode centrale 11 est placée au voisinage du premier bloc d'extrémité 13 et de la turbine Tu.

Ainsi qu'on l'a représenté en outre sur la figure 7, l'extrémité 111 de l'électrode centrale placée au voisinage de la turbine Tu présente une forme tronconique afin d'assurer une répartition aléatoire des veines d'eau au sortir de la turbine. Par répartition aléatoire des veines d'eau au sortir de la turbine on comprendra que les veines d'eau au sortir de la turbine rencontrant l'extrémité tronconique précitée ne sont soumises à aucun trajet préférentiel susceptible de créer, au niveau de l'écoulement de l'eau, une inhomogénéité susceptible d'entraîner un traitement différent en fonction des zones correspondantes. On notera en fait que la turbine Tu utilisée est une turbine non susceptible de créer des turbulences avant l'entrée de l'eau de chambre de traitement 1.

Afin d'augmenter le caractère aléatoire précité, de l'écoulement, la paroi de l'extrémité 111 de forme tronconique de l'électrode cyclindrique centrale 11 est munie de rainures hélicoïdales et l'extrémité de l'électrode centrale 11 est montée à rotation libre autour de l'axe longitudinal Δ de symétrie de la chambre de traitement 1 et de l'électrode centrale 11.

On a ainsi décrit un procédé et un dispositif de traitement physique de l'eau du réseau de distribution particulièrement efficace dans la mesure où celui-ci prend en compte pour le traitement physique par impulsions électriques de l'eau de distribution des paramètres physiques de celle-ci tels que la température et la conductivité électrique.

La mise en oeuvre du procédé objet de l'invention au moyen du dispositif précédemment décrit a pour effet de réduire très fortement les problèmes d'entartrage de canalisations notamment des canalisations de circuit de production d'eau chaude ou de chauffage d'installations domestiques ou industrielles. Le procédé et le dispositif objet de l'invention peuvent également être utilisés pour le traitement des eaux alimentaires, le procédé objet de l'invention ayant tout au plus comme effet une légère augmentation de la turbidité de l'eau en raison de la floculation microscopique du carbonate de calcium et de la diffusion de celui-ci dans l'eau de distribution.

**Revendications**

1. Procédé de traitement physique de l'eau du réseau de distribution consistant à appliquer à l'eau dudit réseau de distribution une série d'impulsions électriques dites impulsions de traitement, caractérisé en ce que lesdites impulsions de traitement ont une fréquence de récurrence directement proportionnelle au débit de l'eau du réseau de distribution, la durée desdites impulsions étant modulée en fonction de la température de l'eau de façon à provoquer, pendant la durée de maintien de chaque impulsion de traitement, une floculation microscopique du carbonate de calcium contenu dans l'eau et la diffusion des flocons microscopiques de carbonate de calcium en dehors de la durée de maintien de chaque impulsion de traitement.

2. Procédé selon la revendication 1, caractérisé en ce que la durée de chaque impulsion de traitement est inversement proportionnelle à la température de l'eau.

3. Procédé selon l'une des revendications 1 et 2, caractérisé en ce que, en vue de permettre une floculation microscopique du carbonate de calcium dans des conditions sensiblement stables de champ électrique appliqué à l'eau, notamment en l'absence de risque de claquage diélectrique, la durée de chaque impulsion de traitement est en outre modulée selon une loi continument décroissante en fonction de la conductivité électrique de l'eau, la durée de chaque impulsion de traitement étant comprise entre 1 et 8 μs pour une conductivité électrique de l'eau comprise entre 2500 et 5000 μS.

4. Procédé selon l'une des revendications 1 à 3, caractérisé en ce que chaque impulsion de traitement est suivie d'une impulsion de polarité opposée de façon à favoriser le décollement de germes ou flocons microscopiques de carbonate de calcium susceptibles de se former sur la paroi de l'électrode, jouant le rôle de cathode, sur laquelle les impulsions de traitement sont appliquées.

5. Dispositif de traitement de l'eau du réseau de distribution par impulsions électriques à durée modulée, comprenant une chambre (1) de traitement de l'eau dans laquelle l'eau du réseau de distribution est en circulation, des moyens (2) de mesure du débit d'eau et des moyens (3) générateurs d'impulsions électriques dites impulsions de traitement appliquées à ladite chambre de traitement (1) et dont la fréquence de récurrence est proportionnelle au débit d'eau mesuré, caractérisé en ce qu'il comporte en outre :

– des moyens (4) de mesure de la température de l'eau délivrant un signal représentatif de ladite température,
– des moyens (5) de modulation de la durée des impulsions de traitement en fonction de la température de façon à provoquer, pendant la durée de maintien de chaque impulsion de traitement, une floculation microscopique du carbonate de calcium contenu dans l'eau et la diffusion des flocons microscopiques de carbonate de calcium en dehors de la durée de maintien de l'impulsion de traitement.

6. Dispositif selon la revendication 5, caractérisé en ce qu'il comporte en outre :

– des moyens (6) de mesure de la conductivité électrique de l'eau,
– des moyens (50) de modulation de la durée des impulsions de traitement en fonction de la conductivité électrique de l'eau de façon à provoquer, pendant la durée de maintien de chaque impulsion de traitement, une floculation microscopique du carbonate de calcium dans des conditions sensiblement stables de champ électrique appliqué à l'eau, notamment en l'absence de risque de claquage diélectrique, la durée de chaque impulsion de traitement étant modulée selon une loi continument décroissante en fonction de la conductivité électrique de l'eau, la durée de chaque impulsion de traitement étant comprise entre 1 μs et 8 μs pour une conductivité électrique de l'eau comprise entre 5000 μS et 2500 μS.

7. Dispositif selon la revendication 5, caractérisé en ce que les moyens (2) de mesure du débit d'eau comprennent :

– une turbine (Tu) disposée dans la chambre de traitement (1),

– un capteur de vitesse (20) couplé à ladite turbine (Tu), ledit capteur de vitesse délivrant un signal périodique dont la fréquence est proportionnelle au débit d'eau,

– des moyens (22) de conversion fréquence-tension permettant de délivrer une tension continue proportionnelle au débit d'eau,

– des moyens oscillateurs à fréquence commandée (23) recevant ladite tension continue proportionnelle au débit d'eau et délivrant un signal de commande dont la fréquence de récurrence est proportionnelle au débit d'eau.

8. Dispositif selon les revendications 5 et 7, caractérisé en ce que lesdits moyens (5) de modulation de la durée des impulsions de traitement en fonction de la température sont constitués par un circuit (50) variateur de rapport cyclique desdites impulsions de commande recevant sur une première entrée ledit signal de commande et sur une deuxième entrée, dite entrée de commande de rapport cyclique, le signal représentatif de la température de l'eau délivré par les moyens (4) de mesure de température, une borne de sortie dudit circuit (50) variateur de rapport cyclique étant reliée à des moyens (51) émetteurs optoélectroniques pour assurer la transmission d'impulsions de commande à durée modulée en fonction de la température.

9. Dispositif selon les revendications 5, 7 et 8, caractérisé en ce que lesdits moyens (4) de mesure de la température de l'eau comportent :

– une sonde (40) de mesure de température placée dans la chambre de traitement (1), ladite sonde délivrant un signal de tension continue représentative de la température de l'eau,

– un oscillateur (41) à fréquence commandée recevant sur une entrée de commande ledit signal de tension continue représentative de la température de l'eau et délivrant un signal périodique dont la fréquence est proportionnelle à la température de l'eau,

– un circuit (42) convertisseur fréquence-tension recevant ledit signal périodique et délivrant sur une borne de sortie une tension continue constituant ledit signal représentatif de la température de l'eau délivré par les moyens de mesure de température.

10. Dispositif selon l'une des revendications 5 à 9, caractérisé en ce que lesdits moyens (3) générateurs d'impulsions électriques de traitement comportent :

– des moyens (30) générateurs d'une haute tension continue d'alimentation,

– des moyens de commutation (31) connectés en parallèle sur une capacité (32) et comportant une borne d'entrée de commande,

– un circuit de charge de ladite capacité (32) permettant d'engendrer lesdites impulsions de traitement, ledit circuit de charge comportant une borne de connexion permettant de connecter la chambre de traitement (1) en série dans le circuit de charge de ladite capacité,

– des moyens optoélectroniques récepteurs (35) couplés aux moyens optoélectroniques émetteurs (51) des moyens de modulation (5) de la durée des impulsions, lesdits moyens optoélectroniques récepteurs étant connectés à ladite borne d'entrée de commande des moyens de commutation (31).

11. Dispositif selon la revendication 10, caractérisé en ce qu'il comporte en outre connecté en parallèle sur ledit circuit de charge, une self inductance (36) constituant avec ladite capacité (32) un circuit résonnant amorti permettant d'engendrer suite à la charge de ladite capacité (32), l'impulsion de polarité opposée à l'impulsion de décharge de la capacité.

12. Dispositif selon les revendications 6, 10 et 11, caractérisé en ce que lesdits moyens (6) de mesure de la conductivité électrique de l'eau sont constitués par :

– une résistance (37) de faible valeur connectée en série dans ledit circuit de charge, permettant d'engendrer un signal de tension proportionnel au courant électrique circulant dans la chambre de traitement (1),

– un circuit redresseur (60, 61) connecté aux bornes de ladite résistance (37) permettant d'engendrer une tension continue proportionnelle audit courant électrique circulant dans la chambre de traitement, ledit circuit redresseur (60, 61) étant connecté à une entrée de commande de polarisation dudit circuit (42) convertisseur fréquence-tension des moyens de mesure de la température de l'eau.

13. Dispositif selon l'une des revendications précédentes, caractérisé en ce qu'il comporte en outre des moyens d'affichage (7, 8) des paramètres de fonctionnement du dispositif tels que débit d'eau, température de l'eau, fréquence des impulsions de traitement, mise sous tension du dispositif, alarme, lesdits moyens d'affichage comportant :

– un multiplexeur (70) recevant les signaux représentatifs desdits paramètres en parallèle et délivrant lesdits signaux codés en séquence série, sous forme d'impulsions codées,

– des moyens (71) de mise en forme des impulsions codées,

– un organe d'affichage satellite (8) relié auxdits moyens de mise en forme (71) par une prise coaxiale.

14. Dispositif selon l'une des revendications précédentes, caractérisé en ce que ladite chambre de traitement (1) comporte :

– une électrode cylindrique périphérique (10) à laquelle sont appliquées les impulsions de traitement,

– une électrode cylindrique centrale (11) reliée à la tension de référence ou masse du dispositif,

– une enveloppe (12) en matériau isolant électrique entourant ladite électrode cylindrique périphérique (10) et constituant enceinte étanche pour l'eau à traiter, un premier (13) et un deuxième (14) bloc d'extrémité constituant paroi frontale de la chambre de traitement (1), chaque bloc d'extrémité (13, 14) étant muni d'une canalisation centrale (131, 141) d'arrivée ou de départ de l'eau de la chambre de traitement.

15. Dispositif selon la revendication 14, caractérisé en ce que le bloc d'extrémité (13) comportant la canalisation centrale d'arrivée (131) est muni sur ladite canalisation de la turbine (Tu) de mesure de débit d'eau.

16. Dispositif selon la revendication 7, caractérisé en ce que l'électrode cylindrique centrale (11) présente une extrémité solidaire dudit deuxième bloc d'extrémité (14), ladite électrode centrale étant partiellement creuse pour constituer canalisation de départ de l'eau et munie au voisinage du deuxième bloc d'extrémité d'orifices traversants (110) mettant en communication ladite chambre de traitement (1) et ladite canalisation de départ (141), l'autre extrémité (111) de ladite électrode centrale (11) étant placée au voisinage du premier bloc d'extrémité et de la turbine (Tu).

17. Dispositif selon la revendication 16, caractérisé en ce que ladite extrémité (111) de l'électrode centrale placée au voisinage de la turbine (Tu) présente une forme tronconique afin d'assurer une répartition aléatoire des veines d'eau au sortir de la turbine.

18. Dispositif selon la revendication 17, caractérisé en ce que la paroi de ladite extrémité (111) de forme tronconique de l'électrode cylindrique centrale (11) est munie de rainures hélicoïdales, ladite extrémité étant montée à rotation libre autour de l'axe longitudinal (Δ) de symétrie de la chambre de traitement (1) et de l'électrode centrale (11).

## Ansprüche

1. Verfahren zur physikalischen Behandlung von Leitungswasser, bei dem auf das Wasser des Leitungsnetzes eine Serie elektrischer Impulse aufgebracht werden, die nachfolgend Behandlungsimpulse genannt werden, **dadurch gekennzeichnet,** daß die Behandlungsimpulse eine Wiederholungsfrequenz haben, die direktproportional der Wasserabgabe aus dem Leitungsnetz ist, wobei die Dauer der Impulse in Abhängigkeit von der Temperatur des Wassers moduliert wird, um während der Einwirkungszeit eines jeden Behandlungsimpulses eine mikroskopische Ausflockung des in dem Wasser enthaltenen Kalziumcarbonats und die Diffusion der mikroskopischen Kalziumcarbonatflocken in den einzelnen Impulspausen hervorzurufen.

2. Verfahren nach Anspruch 1, **dadurch gekennzeichnet,** daß die Dauer eines jeden Behandlungsimpulses umgekehrt proportional zur Wassertemperatur ist.

3. Verfahren nach einem der Ansprüche 1 und 2, **dadurch gekennzeichnet,** daß im Hinblick auf die Ermöglichung einer mikroskopischen Ausflockung des Kalziumcarbonates unter im wesentlichen stabilen Bedingungen des an das Wasser angelegte elektrische Feld, insbesondere ohne Gefahr eines dielektrischen Durchschlags, die Dauer eines jeden Behandlungsimpulses außerdem gemäß einem in Funktion der elektrischen Leitfähigkeit des Wasser kontinuierlich abnehmenden Verlauf moduliert wird, wobei die Dauer eines jeden Behandlungsimpulses zwischen 1 und 8 μs für eine elektrische Leitfähigkeit des Wasser zwischen 2500 und 5000 μS liegt.

4. Verfahren nach einem der Ansprüche 1 bis 3, **dadurch gekennzeichnet,** daß jedem Behandlungsimpuls ein Impuls entgegengesetzter Polarität folgt, um Ablösung von Keimen oder mikroskopischen Kalziumcarbonatflocken zu begünstigen, die sich an der Wand der die Kathode bildenden Elektrode, auf die die Behandlungsimpulse aufgebracht werden, bilden können.

5. Vorrichtung zur Behandlung von Leitungswasser durch elektrische Impulse modulierter Dauer, enthaltend eine Wasserbehandlungskammer (1), in der das Leitungswasser zirkuliert, Einrichtungen (2) zum Messen der Wasserentnahme, und Einrichtungen (3) zum Erzeugen von elektrischen Impulsen, die nachfolgend Behandlungsimpulse genannt werden und der Behandlungskammer (1) zugeführt werden, und deren Wiederholungsfrequenz proportional zur gemessenen Wasserentnahme ist, **dadurch gekennzeichnet,** daß sie weiterhin enthält :

Einrichtungen (4) zum Messen der Wassertemperatur, die ein die Temperatur repräsentierendes Signal liefern,

Einrichtungen (5) zur Modulation der Behandlungsimpulsdauer in Abhängigkeit von der Temperatur, um während der Wirkungsdauer jedes Behandlungsimpulses eine mikroskopische Ausflockung von in dem Wasser enthaltenen Kalziumcarbonat und die Diffusion der mikroskopischen Kalziumcarbonatflocken während der Behandlungsimpulspausen hervorzurufen.

6. Vorrichtung nach Anspruch 5, **dadurch gekennzeichnet,** daß sie weiterhin enthält :

Einrichtungen (6) zum Messen der elektrischen Leitfähigkeit des Wassers,

Einrichtungen (50) zur Modulation der Dauer der Behandlungsimpulse in Abhängigkeit von der elektrischen Leitfähigkeit des Wassers, um während der Wirkungsdauer eines jeden Behandlungsimpulses eine mikroskopische Flockulation des Kalziumcarbonates unter im wesentlichen gleichförmigen Bedingungen des an das Wasser angelegten elektrischen Feldes, insbesondere ohne Gefahr eines dielektrischen Durchschlags, hervorzurufen, wobei die Dauer eines jeden Behandlungsimpulses gemäß einem kontinuierlich abnehmenden Verlauf in Abhängigkeit von der elektrischen Leitfähigkeit des Wassers moduliert ist und die Dauer eines jeden Behandlungsimpulses zwischen 1 µs und 8 µs für eine elektrische Leitfähigkeit des Wassers zwischen 5000 µS und 2500 µS liegt.

7. Vorrichtung nach Anspruch 5, dadurch gekennzeichnet, daß die Einrichtungen (2) für die Messung der Wasserentnahme enthalten :

eine Turbine (Tu), die in der Behandlungskammer (1) angeordnet ist,
einen Geschwindigkeitsaufnehmer (20), der mit der Turbine (Tu) gekuppelt ist und der ein periodisches Signal liefert, dessen Frequenz proportional zur Wasserentnahme ist,
Einrichtungen (22) zur Frequenz/Spannugs-Wandlung, die es ermöglichen, eine Gleichspannung abzugeben, die proportional zur Wasserentnahme ist,
Oszillatoreinrichtungen (23) mit gesteuerter Frequenz, die die zur Wasserentnahme proportionale Gleichspannung aufnehmen und ein Steuersignal liefern, dessen Wiederholungsfrequenz proportional zur Wasserentnahme ist.

8. Vorrichtung nach den Ansprüchen 5 und 7, dadurch gekennzeichnet, daß die Einrichtungen (5) für die Modulation der Behandlungsimpulsdauer in Abhängigkeit von der Temperatur von einer Schaltung (50) zur Veränderung des Tastverhältnisses der Steuerimpulse gebildet sind, die an einem ersten Eingang das Steuersignal und an einem zweiten Eingang, genannt Tastverhältnissteuereingang, das die Wassertemperatur repräsentierende Signal, das von den Temperaturmeßeinrichtungen (5) geliefert wird, aufnehmen, wobei ein Ausgang der Schaltung (50) zur Veränderung des Tastverhältnisses mit optoelektronischen Sendeeinrichtungen (50) verbunden ist, um die Übertragung von Steuerimpulsen mit in Abhängigkeit von der Temperatur modulierter Dauer zu besorgen.

9. Vorrichtung nach den Ansprüchen 5, 7 und 8, dadurch gekennzeichnet, daß die Wassertemperaturmeßeinrichtungen (4) enthalten :

eine Temperaturmeßsonde (40), die in der Behandlungskammer (1) angeordnet ist und die ein Gleichspannungssignal liefert, das für die Wassertemperatur repräsentativ ist,
einen Oszillator (41) mit gesteuerter Frequenz, der an einem, Steuereingang das genannte Gleichspannungssignal, das für die Wassertemperatur repräsentativ ist, aufnimmt, und ein periodisches Signal liefert, dessen Frequenz proportional zur Wassertemperatur ist,
eine Frequenz/Spannungs-Wandlerschaltung (42), die das genannte periodische Signal aufnimmt und an einem Ausgangsanschluß eine Gleichspannung liefert, die das für die Wassertemperatur repräsentative Signal bildet, das von den Temperaturmeßeinrichtungen abgegeben wird.

10. Vorrichtung nach einem der Ansprüche 5 bis 9, dadurch gekennzeichnet, daß die Einrichtungen (3) zum Erzeugen von elektrischen Behandlungsimpulsen enthalten :

Einrichtungen (30) zum Erzeugen einer hohen Versorgungsgleichspannung, Schalteinrichtungen (31), die parallel bei einem Kondensator (32) geschaltet sind und einen Steuereingangsanschluß aufweisen,
eine Ladeschaltung für den Kondensator (32), die es erlaubt, die genannten Behandlungsimpulse zu erzeugen und die einen Verbindungsanschluß aufweist, der es erlaubt, die Behandlungskammer (1) in Serie in die Ladeschaltung des Kondensators zu schalten,
optoelektronische Empfangseinrichtungen (35), die mit den optoelektronischen Sendeeinrichtungen (51) der Impulsdauermodulationseinrichtungen (50) verbunden sind und die mit dem genannten Steuereingangsanschluß der Schalteinrichtungen (31) verbunden sind.

11. Vorrichtung nach Anspruch 10, dadurch gekennzeichnet, daß sie weiterhin eine Selbstinduktivität (36) enthält, die parallel zur Ladeschaltung geschaltet ist und mit dem Kondensator (32) einen gedämpften Resonanzkreis bildet, der es im Anschluß an die Aufladung des Kondensators (32) ermöglicht, den Impuls entgegengesetzter Polarität zum Entladungsimpuls des Kondensators zu erzeugen.

12. Vorrichtung nach den Ansprüchen 6, 10 und 11, dadurch gekennzeichnet, daß die Einrichtungen (6) zum Messen der elektrischen Leitfähigkeit des Wassers gebildet sind von :

einem Widerstand (37) geringer Größe, der in Serie mit der Ladeschaltung geschaltet ist und es erlaubt, ein Spannungssignal proportional zum elektrischen Strom zu erzeugen, der in der Behandlungskammer (1) fließt,
eine Gleichrichterschaltung (60, 61), die mit den Anschlüssen des genannten Widerstandes (37) verbunden ist und es erlaubt, eine Gleichspamung zu erzeugen, die proportional zu dem genamten elektrischen Strom ist, der in der Behandlungskammer fließt, welche Gleichrichterschaltung (60, 61) mit einem Polarisationssteuereingang der Frequenz/ Spamungs-Wandlerschaltung (42) der Wassertemperaturmeßeinrichtungen verbunden ist.

13. Vorrichtung nach einem der vorhergehenden Ansprüche, **dadurch gekennzeichnet**, daß sie weiterhin Anzeigeeinrichtungen (7, 8) für die Funktionsparameter der Vorrichtung, wie Wasserentnahme, Wassertemperatur, Behandlungsimpulsfrequenz, Unter-Spannung-Setzen der Vorrichtung, Alarm, aufweist, enthaltend :

einen Multiplexer (70), der die die genannten Parameter repräsentierenden Signale parallel aufnimmt und die Signale in Serienfolge codiert als codierte Impulse abgibt,

Impulsformereinrichtungen (71) für die codierten Impulse,

ein Satellitenanzeigeorgan (8), das mit den Impulsformereinrichtungen (71) über einen Koaxialanschluß verbunden ist.

14. Vorrichtung nach einem der vorhergehenden Ansprüche, **dadurch gekennzeichnet**, daß die Behandlungskammer (1) enthält :

eine zylindrische Umfangselektrode (10), an die die Behandlungsimpulse angelegt werden,

eine zylindrische Mittenelektrode (11), die mit der Bezugsspannung oder dem Masseanschluß der Vorrichtung verbunden ist,

eine Hülle (12) aus elektrisch isolierendem Material, die die zylindrische Umfangselektrode (10) umgibt und einen dichten Behälter für das zu behandelnde Wasser bildet, einen ersten (13) und einen zweiten (14) Endblock, die die Vorderwand der Behandlungskammer (1) bilden, wobei jeder Endblock (13, 14) mit einem mittleren Wasserzulauf- oder -ablaufkanal (131, 141) der Behandlungskammer versehen ist.

15. Vorrichtung nach Anspruch 14, **dadurch gekennzeichnet**, daß der Endblock (13), der den mittleren Zulaufkanal (31) aufweist, auf diesem Kanal mit der Meßturbine (Tu) für die Wasserabgabe versehen ist.

16. Vorrichtung nach Anspruch 7, **dadurch gekennzeichnet**, daß die zylindrische Mittenelektrode (11) ein Ende aufweist, das mit dem zweiten Endblock (14) fest verbunden ist, wobei die Mittenelektrode teilweise hohl ist, um den Wasserablaufkanal zu bilden, und in Nachbarschaft zum zweiten Endblock mit Queröffnungen (110) versehen ist, die die Behandlungskammer (1) mit dem Ablaufkanal (141) verbinden, wobei das andere Ende (111) der genannten Mittenelektrode (11) in der Nähe des ersten Endblocks und der Turbine (Tu) angeordnet ist.

17. Vorrichtung nach Anspruch 16, **dadurch gekennzeichnet**, daß das Ende (111) der Mittenelektrode, das sich benachbart der Turbine (Tu) befindet, eine kegelige Form aufweist, um eine regellose Aufteilung von Wasserströmen am Ausgang der Turbine zu bewirken.

18. Vorrichtung nach Anspruch 17, **dadurch gekennzeichnet**, daß die Wand des genannten Endes (111) kegeliger Form der zylindrischen Mittenelektrode (11) mit wendelförmigen Rillen versehen ist, wobei das genannten Ende frei drehbar um die Längssymmetrieachse ($\Delta$) der Behandlungskammer (1) und der Mittenelektrode (11) gelagert ist.

## Claims

1. A method for the physical treatment of water in the mains system consisting of applying a series of electrical pulses called treatment pulses to the water in the said mains system, characterised in that the said treatment pulses have a recurrence frequency which is directly proportional to the flow of water in the mains system, the duration of the said pulses being modulated in relation to the temperature of the water in such a way as to cause microscopic flocculation of the calcium carbonate contained in the water during the period for which each treatment pulse is maintained and diffusion of the microscopic flocs of calcium carbonate outside the periods during which the treatment pulses are maintained.

2. A method according to claim 1, characterised in that the length of each treatment pulse is inversely proportional to the temperature of the water.

3. A process according to either of claims 1 and 2, characterised in that in order to permit microscopic flocculation of the calcium carbonate under substantially stable conditions of the electric field applied to the water, in particular when the risk of dielectric breakdown is absent, the length of each treatment pulse is also modulated in accordance with a continually decreasing function related to the electrical conductivity of the water, the length of each treatment pulse lying between 1 and 8 us for an electric conductivity of the water of between 2500 and 5000 $\mu$s.

4. A process according to one of claims 1 to 3, characterised in that each treatment pulse is followed by a pulse of opposite polarity to encourage detachment of the microscopic nuclei or flocs of calcium carbonate which can form on the surface of the electrode acting as cathode to which the treatment pulses are applied.

5. Means for treating water in the mains system by electrical pulses of modulated length, comprising a water treatment chamber (1) through which the mains system water circulates, means (2) for measuring the flow of water and means (3) for generating electrical pulses called treatment pulses applied to the said treatment chamber (1) whose recurrence frequency is proportional to the measured water flow, characterised in that it also comprises :

– means (4) for measuring the temperature of the water providing a signal representing the said temperature,

– means (5) for modulating the length of the treatment pulses in relation to temperature in such a way as to cause microscopic flocculation of the calcium carbonate contained within the water during the period in which treatment pulse is maintained and diffusion of the microscopic flocs of calcium carbonate during the times when the treatment pulse is not maintained.

6. Means according to claim 5, characterised in that they also comprise :

– means (6) for measuring the electrical conductivity of the water,

– means (50) for modulating the length of the treatment pulses in relation to the electrical conductivity of the water so as to bring about microscopic flocculation of the calcium carbonate during the period while each treatment pulse is maintained under substantially stable conditions for the electric field applied to the water, in particular where the risk of dielectric breakdown is absent, the length of each treatment pulse being modulated on the basis of a continually decreasing function which depends on the electrical conductivity of the water, the length of each treatment pulse lying between 1 μs and 8 μs for an electrical conductivity of the water of between 5000 μs and 2500 μs.

7. Means according to claim 5, characterised in that the means (2) for measuring the flow of water comprise :

– a turbine (Tu) located in the treatment chamber (1),

– a speed sensor (20) coupled with the said turbine (Tu), the said speed sensor providing a periodical signal whose frequency is proportional to the flow of water,

– means (22) for converting frequency to voltage providing a continuous voltage which is proportional to the flow of water,

– controlled frequency oscillator means (23) which receive the said continuous voltage which is proportional to the flow of water and produce a control signal whose recurrence frequency is proportional to the flow of water.

8. Means according to claims 5 and 7, characterised in that the said means (5) for modulating the length of the treatment pulses in relation to temperature consist of a circuit (50) which varies the cyclic ratio of the said control pulses receiving the said control signal at a first input and a signal representing the temperature of the water provided by the temperature measuring means (4) at a second input called the cyclic ratio control input, an output terminal from the said circuit (50) varying the cyclic ratio being connected to optical/electronic emitter means (51) which transmit control pulses of a length which is modulated in relation to temperature.

9. Means according to claims 5, 7 and 8, characterised in that the said means (4) for measuring the water temperature comprise :

– a temperature measurement probe (40) located in the treatment chamber (1), the said probe issuing a continuous voltage signal representative of the water temperature,

– a controlled frequency oscillator (41) which receives the said continuous voltage signal representative of the water temperature at a control input and issues a periodical signal whose frequency is proportional to the water temperature,

– a frequency-voltage converter circuit (42) which receives the said periodical signal and delivers a continuous voltage forming the said signal representing the water temperature delivered by the temperature measurement means to an output terminal.

10. Means according to one of claims 5 to 9, characterised in that the said electric treatment pulse generator means (3) comprise :

– means (30) generating a continuous high supply voltage,

– switching means (31) which are connected in parallel to a capacitance (32) and include a control input terminal,

– a circuit charging the said capacitance (32) whereby the said treatment pulses are produced, the said charging circuit including a connection terminal whereby the treatment chamber (1) can be connected in series in the charging circuit for the said capacitance,

– optical/electronic receiver means (35) coupled to optical/electronic emitter means (51) of the means (5) for modulating the pulse lengths, the said optical/electronic receiver means being connected to the said control inlet terminal of the switching means (31).

11. Means according to claim 10, characterised in that they also comprise a self-inductance (36) connected in parallel in the said charging circuit forming together with the said capacitance (32) a dampened resonance circuit whereby a pulse of opposite polarity to the discharge pulse of the capacitance is produced after the said capacitance (32) has been charged.

12. Means according to claims 6, 10 and 11, characterised in that the said means (6) for measuring the electrical conductivity of the water comprise :

– a low value resistance (37) connected in series in the said charging circuit capable of producing a voltage signal proportional to the electric current passing through the treatment chamber (1),

– a rectifier circuit (60, 61) connected to the terminals of the said resistance (37) to produce a continuous voltage proportional to the said electrical current passing through the treatment chamber, the said rectifier circuit (60, 61) being connected to a polarisation control input of the said frequency-voltage converter circuit (42) for the means for measuring the water temperature.

13. Means according to any one of the foregoing claims, characterised in that they also comprise means for displaying (7, 8) the operating parameters of the device such as the water flow, water temperature, frequency of treatment pulses, connection of the device to power, alarm, the said display means comprising :

 – a multiplexer (70) receiving signals representative of the said parameters in parallel and outputting the said signals coded in a series sequence in the form of coded pulses,
 – means (71) for determining the form of the coded pulses,
 – a satellite display member (8) connected to the said form generating means (71) by a coaxial plug.

14. Means according to any one of the foregoing claims, characterised in that the said treatment chamber (1) includes :

 – a peripheral cylindrical electrode (10) to which the treatment pulses are applied,
 – a central cylindrical electrode (11) connected to the reference voltage or earth of the device,
 – an envelope (12) of electrically insulating material surrounding the said peripheral cylindrical electrode (10) and forming a watertight enclosure for the water being treated, a first (13) and a second (14) end block forming the front wall of the treatment chamber (1), each end block (13, 14) being provided with a central duct (131, 141) for the delivery or departure of water to or from the treatment chamber.

15. Means according to claim 14, characterised in that the end block (13) incorporating the central inlet duct (131) is provided with the flow measuring turbine (Tu) in the said duct.

16. Means according to claim 7, characterised in that the central cylindrical electrode (11) has one end integral with the second end block (14), the said central electrode being partly hollow to form an outlet duct for the water and provided in the vicinity of the second end block with through orifices (110) which place the said treatment chamber (1) and the said outlet duct (141) in communication, the other end (111) of the said central electrode (11) being located in the vicinity of the first end block and turbine (Tu).

17. Means according to claim 16, characterised in that the said end (111) of the central electrode located in the vicinity of the turbine (Tu) has a frustoconical shape in order to ensure a random distribution of the streams of water leaving the turbine.

18. Means according to claim 17, characterised in that the wall of the said end (111) of frustoconical shape of the central cylindrical electrode (11) is provided with helicoidal grooves, the said end being mounted to rotate freely about the longitudinal axis (Δ) of symmetry of the treatment chamber (1) and the

central electrode (11).

FIG_1

FIG_2a

FIG_2b

FIG_3

FIG_6

FIG 4

EP 0 338 896 B1

FIG_5

EP 0 338 896 B1

FIG_7

EP 0 338 896 B1